Europäisches Patentamt

European Patent Office

Office européen des brevets

(11) Veröffentlichungsnummer : **0 468 279 B1**

(12) **EUROPÄISCHE PATENTSCHRIFT**

(45) Veröffentlichungstag der Patentschrift :
**11.10.95 Patentblatt 95/41**

(51) Int. Cl.$^6$ : **H04N 7/32**

(21) Anmeldenummer : **91111477.5**

(22) Anmeldetag : **10.07.91**

(54) **Verfahren zum Bestimmen von Bewegungsvektoren für Teilbildbereiche einer Quellbildsequenz.**

(30) Priorität : **24.07.90 DE 4023449**

(43) Veröffentlichungstag der Anmeldung :
**29.01.92 Patentblatt 92/05**

(45) Bekanntmachung des Hinweises auf die
Patenterteilung :
**11.10.95 Patentblatt 95/41**

(84) Benannte Vertragsstaaten :
**AT BE CH DE ES FR GB IT LI NL**

(56) Entgegenhaltungen :
EP-A- 0 348 207
EP-A- 0 420 653
US-A- 4 838 685
US-A- 4 937 666
FOURTH INTERNATIONAL COLLOQUIUM ON
ADVANCED TELEVISION SYSTEMS 25. Juni
1990, OTTAWA(CA) Seiten 3B.3.1 - 3B.3.19 E.
DUBOIS ET AL. 'Review of Techniques for
Motion Estimation and Motion Compensation'
SPIE Bd. 1001, 1988, Seiten 942 - 951 M. BIER-
LING 'Displacement estimation by hierarchical blockmatching'

(56) Entgegenhaltungen :
IEEE TRANSACTIONS ON COMMUNICA-
TIONS Bd. 38, Nr. 4, April 1990, NEW YORK US,
Seiten 477 - 486 P. STROBACH 'Tree-Structu-
red Scene Adaptive Coder'
FREQUENZ Bd. 43, Nr. 3, März 1989, BERLIN
DE Seiten 86 - 96 M. GILGE ET AL.'Codierung
von farbigen Bewegtbildszenen mit 64 kbit/s-
Ein neuer Ansatz zur Verwirklichung eines
Bildtelefons im ISDN (Teil I)'
SIGNAL PROCESSING. IMAGE COMMUNICA-
TION Bd. 3, Nr. 1, Februar 1991, AMSTERDAM
NL, Seiten 3 - 21 M.H. AHMAD ET AL. 'Video
Subband VQ Coding at 64 kbit/s Using Short-
Kernel Filter Banks with an Improved Motion
Estimation Technique'

(73) Patentinhaber : **ANT Nachrichtentechnik
GmbH
Gerberstrasse 33
D-71522 Backnang (DE)**

(72) Erfinder : **Hildenbrand, Klaus, Dr.-Ing.
Rosensteinstrasse 11
W-7069 Berglen (DE)**
Erfinder : **Mayer, Jörg, Dipl.-Ing.
Obere Waiblinger Strasse 120
W-7000 Stuttgart 50 (DE)**

## Beschreibung

Die Erfindung betrifft ein Verfahren zum Bestimmen von Bewegungsvektoren für Teilbildbereiche einer Quellbildsequenz.

Wenn bewegte Bilder über einen Übertragungskanal mit begrenzter Datenrate übertragen werden sollen, bedient man sich häufig sogenannter hierarchischer Blockmatching-Verfahren zur Erstellung von Bewegungsvektoren für Teilbildbereiche (Blöcke), aus denen nach der Übertragung die bewegten Bilder rekonstruiert werden können. Ausgehend von einem Referenzblock mit beispielsweise 16 x 16 Bildpunkten im aktuellen Quellbild wird dieser Referenzblock in einem Suchbereich von beispielsweise 48 x 48 Bildpunkten des zeitlich davor liegenden Bildes an alle Bildpunktpositionen dieses Suchbereiches gebracht. Für alle Bildpunktpositionen wird untersucht, wo die Übereinstimmung der Bildpunkte des Referenzblocks gegenüber den Bildpunkten des Suchbereiches am größten ist. Für diese Entscheidung bedient man sich eines Fehlerkriteriums - Matching-Kriteriums - z.B. der minimalen absoluten Differenz MAD (IEEE Proceedings, International Conference on Acoustics, Speech and Signal Processing, New York, USA 1987, Seite 1063 - 1066, Vol. 2).

Bei herkömmlichen Verfahren zur Bestimmung von Bewegungsvektoren, beispielsweise bei den in der EP-A-0 368 151 angeführten Verfahren werden Bewegungsvektoren in mehreren Suchschritten bestimmt. Im ersten Suchschritt wird ein Bewegungsvektor in einem Bild mit nur grober Auflösung ermittelt, der dann als Startwert für den zweiten Suchschritt dient. Im zweiten Suchschritt wird der im ersten Suchschritt ermittelte Bewegungsvektor verbessert durch Feststellen des Fehlerminimums in seiner Umgebung in einem Bild mit höherer Auflösung. Gegebenenfalls kann der im zweiten Suchschritt ermittelte Bewegungsvektor nochmals verbessert werden durch Feststellen des Fehlerkriteriums in einem Bild noch höherer Auflösung.

Es sind hierarchische Block-Matching Verfahren bekannt, wobei eine Filterung und eine Abtastratenwandlung stattfinden, z.B. aus SPIE, Band 1001, 1988, Seiten 942 bis 951, M. Bierling : "Displacement Estimation by hierarchical Blockmatching", oder aus IEEE Transactions on Communications, Band 38, Nr. 4, April 1990, Seiten 477 bis 486, P. Strobach : "Tree-Structured Scene Adpative Encoder". Bei diesen Verfahren wird aber ein ganzes Bewegungsvektorfeld oder ein einziger Bewegungsvektor pro Block bearbeitet, deren Auflösung schrittweise verbessert wird.

Aufgabe der Erfindung ist es, ein Verfahren zum Bestimmen von Bewegungsvektoren für Teilbildbereiche einer Quellbildsequenz anzugeben, welches sich aufwandsarm durchführen läßt und welches Vektoren liefert, die tatsächliche Bewegungen beschreiben. Diese Aufgabe wird durch die Schritte des Anspruchs 1 gelöst. Die abhängigen Ansprüche zeigen vorteilhafte Weiterbildungen dieses Verfahrens auf.

Die Erfindung geht von folgenden Erkenntnissen aus: Bei bisherigen Verfahren zur Bestimmung von Bewegungsvektoren ist es leicht möglich, daß nur ein lokales Minimum des Fehlerkriteriums gefunden wird und somit ein falscher Bewegungsvektor bestimmt wird. Um diese Unzulänglichkeit zu vermeiden, wäre es möglich, für alle Bildpunkte das Minimum des Fehlerkriterums festzustellen. Dies würde aber zu einem unvertretbaren Rechenaufwand führen, der außerdem für Echtzeitanwendungen ungeeignet ist. Durch das erfindungsgemäße Verfahren werden bei relativ geringem Rechen- bzw. Implementierungsaufwand schnell zuverlässige und hinreichend genaue Bewegungsvektoren bestimmt. Durch eine Filterung und eine Abtastratenwandlung bei der Grobsuche im ersten Suchschritt werden Bilddetails, z.B. scharfe Kanten, nicht vollständig unterdrückt. Dies führt zu einer qualitativ besseren Bildrekonstruktion als bei jenen Verfahren, bei denen im ersten Suchschritt ein Teil von Bildpunkten völlig unberücksichtigt bleibt.

Anhand der Zeichnungen wird die Erfindung nun näher erläutert. Es zeigen

Figur 1 einen Referenzblock von 16 x 16 Bildpunkten in einem Suchbereich von 48 x 48 Bildpunkten.

Figur 2 das Prinzip der Parabelinterpolation zur Bestimmung eines Bewegungsvektors auf Subpelgenauigkeit.

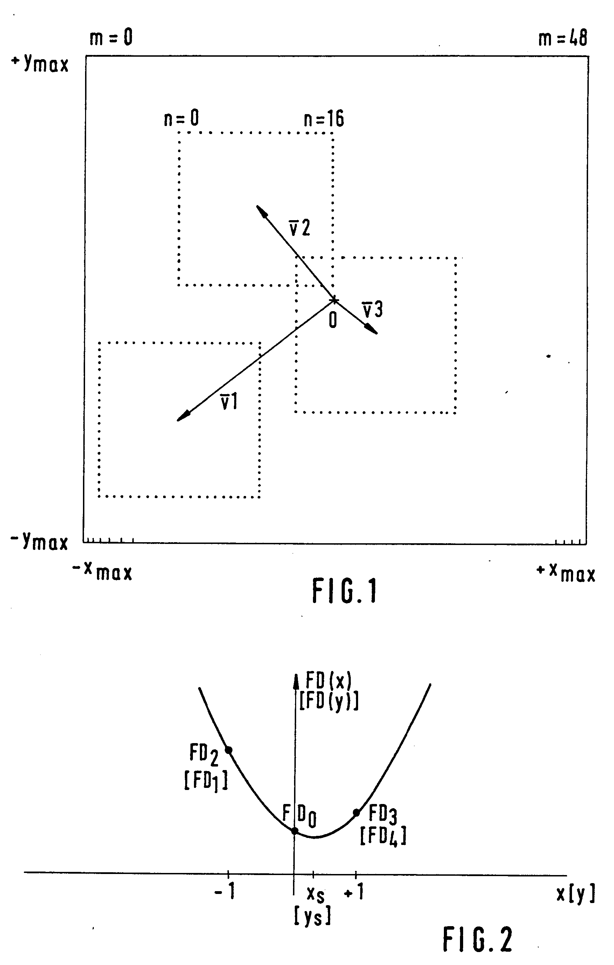

In Figur 1 ist ein Teilbildbereich einer Quellbildsequenz dargestellt mit einem Referenzblock des Bildes k der Größe n x n Bildpunkte, z.B. 16 x 16, an drei verschiedenen Suchpositionen innerhalb des Suchblocks der Größe m x m Bildpunkte, z.B. 48 x 48 eines zeitlich davor liegenden Bildes k-1 oder k-3 dargestellt. Für jede Suchposition des Referenzblocks im Suchblock werden für einen Teilbildbereich die "Displaced-Frame-Differenzen" DFD (Differenz eines Teilbildbereiches zu einem verschobenen Teilbildbereich des zeitlich vorangegangenen Bildes) auf übliche Weise nach folgender Beziehung für den Vektorbereich

$$- x_{max} \leqq x \leqq + x_{max}$$

und

$$- y_{max} \leqq y \leqq + y_{max}$$

bestimmt:

$$\text{DFD}(x,y) = \sum_{i=1}^{n} \sum_{j=1}^{n} \left| I_{k-1}(x + i, \, y + j) - I_k(i,j) \right|$$

wobei I den Amplitudenwert der Bildpunkte angibt und i, j die Laufparameter der Bildpunktkoordinaten innerhalb des Referenzblocks. Die Bestimmung dieser DFD-Werte geschieht in einem ersten Suchschritt in einem Bild, welches gegenüber dem Quellbild durch Filterung und Abtastratenwandlung in der Auflösung reduziert ist. Es kann beispielsweise ein "Down-4-Bild" verwendet werden, d.h. ein Bild, welches gegenüber einem Quellbild in der Bandbreite und Auflösung um den Faktor 4 reduziert ist, also nur noch 1/4 der ursprünglichen Zeilen- und Bildpunkt-Zahl enthält. Aus den Displaced-Frame-Differenzen DFD wird ein Fehlerkriterium gewonnen, z.B. die minimale absolute Differenz MAD, die sich aus den DFD-Werten folgendermaßen ergibt:

$$\text{MAD} = \min(\text{DFD}(x,y)) \text{ für}$$
$$- x_{max} \leqq x \leqq x_{max}$$
$$- y_{max} \leqq y \leqq y_{max}$$

Mit diesem Fehlerkriterium werden nun jene drei Bewegungsvektoren $\bar{v}1$, $\bar{v}2$, $\bar{v}3$ ausgewählt, für die dieses Fehlerkriterium die kleinsten Werte liefert.

In Figur 1 sind diese drei Bewegungsvektoren kennzeichnend, ausgehend vom Zentrum des Suchblocks, dargestellt. Für die Position dieses Zentrums gilt, daß es bezogen auf das Zentrum des zeitlich davor liegenden Bildes unverschoben ist und ihm deshalb der "Nullvektor" zugeordnet wird. Die so ausgewählten drei Bewegungsvektoren $\bar{v}1$, $\bar{v}2$ $\bar{v}3$ werden nun auf Subpelgenauigkeit bestimmt, beispielsweise durch Parabelinterpolation, jeweils mittels der Displaced-Frame-Differenz DFD für den ausgewählten Bewegungsvektor und den Werten der Displaced-Frame-Differenz DFD benachbarter Bildpunkte. Diese Parabelinterpolation für Bewegungsvektoren ist an sich aus Fortschritts-Berichte, VDI Reihe 10, Nr. 51, Düsseldorf 1986; Beyer, Siegfried; "Displacement-Schätzverfahren für Fernsehbildsignale mit minimaler Schätzvarianz", insbesonders Seiten 80 - 84 bekannt, wird aber hier nochmals kurz erläutert. Nach der Berechnung der DFD-Werte, eines n x n Referenzblocks aus dem Quellbild k in einem m x m Suchblock des Quellbildes k-1 stehen anschließend $m^2$ berechnete DFD-Werte zur Verfügung. Die Lage des DFD-Minimums ergibt dann den Verschiebevektor V'($x_m$, $y_m$) mit den ganzzahligen Kompontenten $x_m$, $y_m$. Für die Bewegungskompensation kann aber eine Subpelgenauigkeit erforderlich sein, sodaß die Vektoren genauer bestimmt werden müssen.

Ausgehend von der Annahme, daß das DFD-Minimum um den Tiefpunkt einen parabelförmigen Verlauf besitzt, wird aus dem gefundenen Minimumwert $FD_o$ und dessen vier Umgebungspunkten ($FD_1$....$FD_4$) eine Parabelinterpolation verwendet. Die vier Umgebungswerte sind dabei wie folgt angeordnet:

$$FD_1$$
$$FD_2 \quad FD_o \quad FD_3$$
$$FD_4.$$

Die folgende Beschreibung wird nur für die x-Richtung vorgenommen und gilt genauso für die y-Richtung, wenn die Werte wie folgt ersetzt werden (Figur 2):

$$FD_1 \, \# \, FD_2$$
$$FD_4 \, \# \, FD_3$$
$$y \, \# \, x.$$

Entsprechend der oben genannten Annahme eines parabelförmigen Verlaufs um das DFD-Minimum wird eine Funktion 2. Ordnung der folgenden Form verwendet:

$$y = ax^2 + bx + c \quad (1)$$

Durch Einsetzen der drei Punkte (-1, $FD_2$), (O, $FD_o$) und (1, $FD_3$) sind die Koeffizienten a, b, c von (1) bestimmbar:

$$c = FD_o$$
$$a = 0.5 * [FD_2 + FD_3 - 2FD_o]$$
$$b = 0.5 * [FD_3 - FD_2] \quad (2)$$

Aus der Ableitung von Gleichung (1) kann der Ort $x_s$ des Minimums bestimmt werden:

$$y' = 2ax + b$$

mit dem Minimum für y' = 0:

$$x_s = -\frac{b}{2a} = \frac{-(FD_3 - FD_2)}{2(FD_2 + FD_3 - 2FD_o)} = \frac{FD_2 - FD_3}{2(FD_2 + FD_3 - 2FD_o)}$$

wobei $|x_s| < 1$ ist und entsprechend den Anforderungen z.B. auf 0,2 pel Genauigkeit, gerundet wird.

Der interpolierte Vektor $\overline{V}$ besitzt dann die Komponenten $(x_m + x_s, y_m + y_s)$.

Die nun auf Subpelgenauigkeit bestimmten drei Bewegungsvektoren werden nun mit einem der vorherigen Reduzierung entsprechenden Faktor multipliziert, um Bewegungsvektoren zu erhalten, die für das in der Auflösung nichtreduzierte Quellbild Gültigkeit haben.

In einem zweiten Suchschritt werden im nichtreduzierten Quellbild jeweils im Bereich der drei ermittelten Bewegungsvektoren, z.B. in einer kleinen Umgebung von $\pm$ 2pel, die minimalen Werte des Fehlerkriteriums ermittelt. Zusätzlich werden in einer kleinen Umgebung von beispielsweise wiederum $\pm$ 2pel um den Nullvektor entsprechende Werte ermittelt. Aus den vier Suchvorgängen wird der kleinste aller so bestimmten minimalen Werte des Fehlerkriteriums ausgewählt und der zu diesem Wert gehörige Bewegungsvektor als Bewegungsvektor für den ganzen Teilbildbereich beispielsweise für die Übertragung der Bildsequenz bereitgestellt. Falls der Bewegungsvektor für den Teilbildbereich genauer bestimmt werden muß, wird nochmals eine Parabelinterpolation auf die zuvor geschilderte Art und Weise vorgenommen und der Bewegungsvektor auf beispielsweise 0.5 pel Genauigkeit bestimmt.

Bei nur kleinen Displaced-Frame-Differenzen DFD, die zur Bestimmung der MAD berechnet werden müssen, können aufgrund von rauschbehafteten Vorlagen Vektoren gefunden werden, die zwar das MAD-Kriterium erfüllen, die jedoch nicht der wahren Bewegung entsprechen. Um für solche Fälle die Tendenz zum Finden kleiner Vektoren oder des Nullvektors zu erhöhen, wird dem DFD-Wert der einzelnen Suchpositionen ein Grundoffset überlagert, dessen Größe mit wachsendem quadratischen Abstand $(x^2 + y^2)$ vom Nullvektor ausgehend zunimmt und damit an den Eckpositionen, z.B. bei Vektor $x_{max}$, $y_{max}$, seinen Maximalwert $W_{max}$ annimmt. Dies entspricht einem Bonus für kleine Vektoren, wodurch speziell bei rauschbehafteten Bildvorlagen verbesserte Ergebnisse erzielt werden.

Trotz dieser Maßnahmen kann bei ruhenden Bildteilen - richtiger Vektor ist Nullvektor - aufgrund des Rauschens ein kleiner Vektor gefunden werden. Es ist deshalb sinnvoll, die in der Vergangenheit als Nullvektoren gefundenen Vektoren mit ihrer Framedifferenz $FD = FD_0$ zur Berechnung einer adaptiven Schwelle S heranzuziehen, um neu berechnete FD-Werte $FD_{0n}$ an der Stelle $(x = 0, y = 0)$ dann sofort als absolutes Minimum zu bezeichnen, wenn gilt:

$$FD_{0n} < S.$$

Die Suche an weiteren Positionen kann damit für diesen Block abgebrochen werden; es wurde der Nullvektor gefunden.

Falls diese Bedingung nicht erfüllt ist, wird die zuvor beschriebene Suchmethode durchgeführt, wobei auch ein Nullvektor mit FD > S gefunden werden kann.

Die adaptive Schwelle wird dann mit jedem gefundenen Nullvektor nachgeführt, wenn seine Framedifferenz FD die Bedingung

$$FD < \mu * S$$

erfüllt, wodurch eine zu starke Veränderung der Schwelle bei Bildänderungen, die nicht durch eine translatorische Bewegung entstanden sind, vermieden wird. Der Faktor $\mu$ wird vorteilhafterweise zwischen 4 und 16, z.B. 8, gewählt. Die Nachführung der Schwelle erfolgt nach folgender Beziehung:

$$S_{neu} = ((\nu = 1) \cdot S_{alt} + FD_0)/\nu)$$
$$\text{mit z.B. } \nu = 8.$$

Da der Wert S ein Maß für den Rauschbelag des Bildes darstellt, kann damit auch der Grundoffset $W_{max}$ adaptiv an den Rauschbelag angeglichen werden.

Bisher wurden bei der Suche immer drei Bewegungsvektoren mit minimalem Fehlerkriterium ausgewählt. Bei weniger hohen Ansprüchen an die Zuverlässigkeit bei der Bestimmung des Bewegungsvektors für einen Teilbildbereich können bei der Suche auch nur zwei Bewegungsvektoren mit minimalem Fehlerkriterium ausgewählt werden.

Als Fehlerkriterium kann anstelle der mittleren absoluten Differenz (MAD) auch der mittlere quadratische Fehler (MQF), vgl. EP-A-0 368 151, oder ein anderes brauchbares Fehlerkriterium verwendet werden.

**Patentansprüche**

1. Verfahren zum Bestimmen von Bewegungsvektoren für Teilbildbereiche einer Quellbildsequenz unter Anwendung folgender Schritte:

a) Suchen von mindestens zwei Bewegungsvektoren für Bildpunkte in einem Teilbildbereich eines Bildes, welches bezüglich des Quellbildes durch Filterung und Abtastratenwandlung in der Auflösung reduziert ist, wobei bei der Suche jene Bewegungsvektoren anhand eines insbesondere aus den Differenzen eines Teilbildbereichs zu einem verschobenen Teilbildbereich des vorangegangenen Bildes gewonnenen Fehlerkriteriums für die Bewegung, z.B. der minimalen absoluten Displaced-Frame-Differenz (MAD), ausgewählt werden, für die das Fehlerkriterium die kleinsten Werte annimmt,

b) Bestimmen der mindestens zwei ausgewählten Bewegungsvektoren auf Subpelgenauigkeit durch Interpolation, z.B. Parabelinterpolation, jeweils mittels des Wertes des Fehlerkriteriums für den ausgewählten Bewegungsvektor und den Werten des Fehlerkriteriums benachbarter Bildpunkte,

c) Ermitteln von Bewegungsvektoren, die für das in der Auflösung nicht reduzierte Quellbild Gültigkeit haben, indem die auf Subpelgenauigkeit bestimmten Bewegungsvektoren mit einem der Reduzierung der Auflösung entsprechenden Faktor multipliziert werden,

d) Suchen von minimalen Werten des Fehlerkriteriums im nicht reduzierten Quellbild im Umgebungs-Bereich der ermittelten Bewegungsvektoren und im Umgebungs-Bereich jener Position des Teilbildbereichs, die bezogen auf das zeitlich davor liegende Quellbild unverschoben ist (Nullvektor),

e) Auswählen des kleinsten aller so bestimmten minimalen Werte des Fehlerkriteriums und Bereitstellen des zu diesem kleinsten Wert gehörigen Bewegungsvektors als Bewegungsvektor des Teilbildbereiches.

2. Verfahren nach Anspruch 1, dadurch gekennzeichnet, daß der bereitgestellte Bewegungsvektor des Teilbildbereiches auf Subpelgenauigkeit durch Interpolation, z.B. Parabelinterpolation, seines Wertes des Fehlerkriteriums und den Werten des Fehlerkriterums benachbarter Bildpunkte bestimmt wird.

3. Verfahren nach Anspruch 1 oder 2, dadurch gekennzeichnet, daß im Schritt a) des Anspruchs 1 genau drei Bewegungsvektoren für Bildpunkte im Teilbildbereich ausgewählt werden.

4. Verfahren nach einem der Ansprüche 1 bis 3, dadurch gekennzeichnet, daß ausgehend von der unverschobenen Position des Teilbildbereichs, eine hinsichtlich wachsender Entfernung von dieser Position innerhalb des Teilbildbereichs größer werdende Bewertung der Displaced-Frame-Differenzen einander entsprechender Bildpunkte vorgenommen wird.

5. Verfahren nach Anspruch 4, dadurch gekennzeichnet, daß die Bewertung mit wachsendem quadratischen Abstand von der unverschobenen Position vergrößert wird.

6. Verfahren nach einem der Ansprüche 1 bis 4, dadurch gekennzeichnet, daß die zu den unverschobenen Positionen zeitlich zuvor gelegener Quellbilder gehörigen Displaced-Frame-Differenzen zur Berechnung einer adaptiven Schwelle herangezogen werden, daß neu ermittelte Displaced-Frame-Differenzen für die unverschobene Position von Quellfolgebildern dann als absolutes Minimum ausgewählt werden, wenn deren ermittelte Displaced-Frame-Differenzen unter dieser Schwelle liegen, und daß in letzterem Falle die Suche nach weiteren Bewegungsvektoren für die das Fehlerkriterium in diesem Teilbildbereich kleinste Werte annimmt, abgebrochen wird.

7. Verfahren nach Anspruch 6, dadurch gekennzeichnet, daß die Schwelle nach folgender Beziehung nachgeführt wird:

$$S_{neu} = ((v - 1) \cdot S_{alt} + FD_0) / v,$$

wobei $v$ insbesondere zwischen 4 und 16 liegt, und $FD_0$ die ermittelte Frame-Differenz für die unverschobene Position des jeweiligen Teilbildbereichs im aktuellen Quellbild ist und $S_{alt}$ die zuvor ermittelte adaptive Schwelle.

8. Verfahren nach Anspruch 4 oder 5 und einem der Ansprüche 6 oder 7, dadurch gekennzeichnet, daß entsprechend der Höhe der ermittelten adaptiven Schwelle der Faktor bei der Bewertung der Displaced-Frame-Differenzen ausgehend von der unverschobenen Position angeglichen wird.

## Claims

1. Method for the ascertaining of movement vectors for partial image regions of a source image sequence with the use of the following steps:

a) searching for at least two movement vectors for image dots in a partial image region of an image which is reduced in the resolution relative to the source image by filtering and scanning rate conversion, wherein those movement vectors are selected during the search with the aid of an error criterion for the movement, for example the minimum absolute displaced-frame difference (MAD), for which the error criterion, which has been obtained especially from the differences of one partial image region from a displaced partial image region of the preceding image, assumes the smallest values,

b) ascertaining of the at least two selected movement vectors to subpel accuracy by interpolation, for example by parabolic interpolation, each time by means of the error criterion for the selected one of the movement vectors and the values of the error criterion of neighbouring image dots,

c) ascertaining of movement vectors which have validity for the source image, which is not reduced in the resolution, in that the movement vectors ascertained to subpel accuracy are multiplied by a factor corresponding with the reduction in resolution,

d) searching for minimum values of the error criterion in the unreduced source image in the surrounding region of the ascertained movement vectors and in the surrounding region of that position of the partial image region, which is not displaced (zero vector) relative to the source image lying in front thereof in time, and

e) selection of the smallest of all such ascertained minimum values of the error criterion and presentation of the movement vector belonging to this smallest value as movement vector of the partial image region.

2. Method according to claim 1, characterised thereby, that the presented movement vector of the partial image region is ascertained to subpel accuracy by interpolation, for example by parabolic interpolation, of its value of the error criterion and the values of the error criterion of neighbouring image dots.

3. Method according to claim 1 or 2, characterised thereby, that exactly three movement vectors for image dots in the partial image region are selected in step (a) of the claim 1.

4. Method according to one of the claims 1 to 3, characterised thereby, that starting out from the undisplaced position of the partial image region, a weighting, which becomes greater with increasing distance from this position within the partial image region, of the displaced-frame differences of mutually corresponding image dots is undertaken.

5. Method according to claim 4, characterised thereby, that the weighting is increased with increasing square of the distance from the undisplaced position.

6. Method according to one of the claims 1 to 4, characterised thereby, that the displaced-frame differences, which belong to the undisplaced positions of source images preceding in time, are drawn upon for the computation of an adaptive threshold, that newly ascertained displaced-frame differences for the undisplaced position of source sequence images are then selected as absolute minimum when their ascertained displaced-frame differences lie below this threshold and that, in the latter case, the search for further movement vectors, for which the error criterion assumes smallest values in this partial image region, is broken off.

7. Method according to claim 6, characterised thereby, that the threshold is tracked according to the following relationship:

$$S_{new} = ((v - 1).S_{old} + FD_0)/v,$$

wherein $v$ in particular lies between 4 and 16, FDO is the ascertained frame difference for the undisplaced position of the respective partial image region in the actual source image and $S_{old}$ is the previously ascertained adaptive threshold.

8. Method according to claim 4 or 5 and one of the claims 6 or 7, characterised thereby, that the factor for the weighting of the displaced-frame differences is assimilated in correspondence with the height of the ascertained adaptive threshold starting out from the undisplaced position.

**Revendications**

1. Procédé pour déterminer des vecteurs de mouvement pour des zones d'image partielle d'une séquence d'images de source avec application des étapes suivantes:

a) rechercher au moins deux vecteurs de mouvement pour des points d'image dans une zone d'image partielle d'une image dont la résolution est réduite, par rapport à l'image de source, par filtrage et conversion du taux d'échantilonnage, avec sélection, lors de la recherche, à l'aide d'un critère d'erreur pour le mouvement, critère qui est obtenu en particulier à partir des différences d'une zone d'image partielle par rapport à une zone d'image partielle déplacée de l'image précédente, par exemple à l'aide de la différence d'image déplacée minimale absolue (MAD), des vecteurs de mouvement pour lesquels le critère d'erreur prend les plus petites valeurs,

b) déterminer les vecteurs de mouvement sélectionnés, au nombre de deux au moins, avec une précision inférieure à un pixel, par interpolation, par exemple par interpolation parabolique, chaque fois au moyen de la valeur du critère d'erreur pour le vecteur de mouvement sélectionné et des valeurs du critère d'erreur de points d'image voisins,

c) établir des vecteurs de mouvement valables pour l'image de source dont la résolution n'a pas été réduite, par multiplication des vecteurs de mouvement, déterminés avec une précision inférieure à un pixel, par un facteur correspondant à la réduction de la résolution,

d) rechercher des valeurs minimales du critère d'erreur dans l'image de source non réduite, dans la région environnante des vecteurs de mouvement déterminés et dans la région environnante de la position de la zone d'image partielle qui n'est pas déplacée par rapport à l'image de source précédente dans le temps (vecteur zéro), et

e) sélectionner de la plus petite de toutes les valeurs minimales ainsi déterminées du critère d'erreur et mise à dispositon du vecteur de mouvement appartenant à cette plus petite valeur en tant que vecteur de mouvement de la zone d'image partielle.

2. Procédé selon la revendication 1, caractérisé en ce que le vecteur de mouvement mis à disposition de la zone d'image partielle, est déterminé avec une précision inférieure à un pixel par interpolation, par exemple par interpolation parabolique, de sa valeur du critère d'erreur et des valeurs du critère d'erreur de points d'image voisins.

3. Procédé selon la revendication 1 ou 2, caractérisé en ce que trois vecteurs de mouvement exactement, pour des points d'image dans la zone d'image partielle, sont sélectionnés dans l'étape a) de la revendication 1.

4. Procédé selon une des revendications 1 à 3, caractérisé en ce que, partant de la position non déplacée de la zone d'image partielle, une pondération croissante, pour ce qui concerne l'augmentation de la distance de cette position à l'intérieur de la zone d'image partielle, des différences d'images déplacées est effectuée pour des points d'image correspondant entre eux.

5. Procédé selon la revendication 4, caractérisé en ce que la pondération est augmentée à mesure que la distance au carré de la position non déplacée augmente.

6. Procédé selon une des revendications 1 à 4, caractérisé en ce que les différences d'images déplacées appartenant aux positions non déplacées d'images de source précédentes dans le temps, sont utilisées pour calculer un seuil adaptatif, que des différences d'images déplacées nouvellement déterminées pour la position non déplacée d'images de source suivantes sont sélectionnées comme minimum absolu lorsque leurs différences d'images déplacées déterminées se trouvent sous ce seuil, et que, dans ce dernier cas, la recherche d'autres vecteurs de mouvement, pour lesquels le critère d'erreur prend les plus petites valeurs dans cette zone d'image partielle, est interrompue.

7. Procédé selon la revendication 6, caractérisé en ce que le seuil est rajusté selon l'équation suivante:

$$S_{nou} = ((\nu - 1) \cdot S_{anc} + FD_0) / \nu$$

où $\nu$ est comprise en particulier entre 4 et 16, $FD_0$ est la différence d'image déterminée pour la position non déplacée de la zone d'image partielle concernée dans l'image de source actuelle et $S_{anc}$ est le seuil adaptatif déterminé précédemment.

8. Procédé selon la revendication 4 ou 5 et une des revendications 6 et 7, caractérisé en ce que le facteur utilisé dans la pondération des différences d'images déplacées est ajustée, à partir de la position non déplacée, en fonction de l'amplitude du seuil adaptatif déterminé.

m = 0                                                  m = 48

+ $y_{max}$

n = 0                      n = 16

$\bar{v}2$

$\bar{v}3$

0

$\bar{v}1$

- $y_{max}$

- $x_{max}$                                          + $x_{max}$

## FIG.1

FD (x)
[FD(y)]

$FD_2$
[$FD_1$]

F $D_0$        $FD_3$
[$FD_4$]

- 1        $x_S$   + 1                              x[y]
         [ys]

## FIG.2